# EUROPÄISCHE PATENTSCHRIFT

(11) **EP 1 617 935 B1**
(45) Veröffentlichungstag und Bekanntmachung des Hinweises auf die Patenterteilung: **13.04.2011**
(21) Anmeldenummer: 04729026.7
(22) Anmeldetag: 23.04.2004
(51) Int. Cl.: B01D 63/08, B01D 61/18, C02F 1/44

(54) **MEMBRAN-STÜTZVORRICHTUNG UND MEMBRANFILTER**
MEMBRANE-SUPPORTING DEVICE AND MEMBRANE FILTER
DISPOSITIF DE SUPPORT DE MEMBRANE ET FILTRE A MEMBRANE

(30) Priorität: 24.04.2003 EP 03405288
(43) Veröffentlichungstag der Anmeldung: 25.01.2006
(73) Patentinhaber: UTISOL Technologies AG, 6304 Zug (CH)
(72) Erfinder: HARMS, Eberhard, 96524 Muppert (DE); GRIGO, Mark, 59494 Soest (DE)
(74) Vertreter: Frei Patent Attorneys
(86) Internationale Anmeldenummer: PCT/CH2004/000246
(87) Internationale Veröffentlichungsnummer: WO 2004/094048

(56) Entgegenhaltungen:
- WO-A-02/45827
- DE-A- 2 643 122
- FR-A- 2 287 933
- GB-A- 863 396
- GB-A- 2 009 618
- US-A- 4 062 756
- PATENT ABSTRACTS OF JAPAN Bd. 009, Nr. 306 (C-317), 3. Dezember 1985 (1985-12-03) -& JP 60 143803 A (ASAHI KASEI KOGYO KK), 30. Juli 1985 (1985-07-30)

## Beschreibung

Die Erfindung bezieht sich auf das Gebiet der Filtertechnik, insbesondere auf eine Membran-Stützvorrichtung und ein Membranfilter für Wasser gemäss dem Oberbegriff der Patentansprüche 1 und 5.

### STAND DER TECHNIK

Membranfilter werden beispielsweise in Filteranlagen für Abwasser oder Trinkwasser verwendet. Dabei sind plattenförmige Filterlamellen in eine zu filternde Flüssigkeit getaucht. Eine Vielzahl von Filterplatten oder Filterlamellen bildet eine Filtereinheit. In dieser Art werden beispielsweise rechteckige Filterplatten zu quaderförmigen Filtereinheiten verbunden, oder werden trapez- oder kreissegmentförmige Filterplatten zu einer zylindrischen Anordnung zusammengestellt.

Solche Filterplatten sind beispielsweise in der EP-A-0 937 494, und der Zusammenfassung der JP-A-03004984 offenbart. Eine einzelne Filterplatte besteht dabei aus einer starren Platte, welche auf beiden Seiten eine Filtermembrane trägt. Um einen Abfluss eines Permeats, also einer gefilterten Flüssigkeit, zu ermöglichen, ist zwischen den Membranen und der Platte ein Stützvlies oder "Spacer" angeordnet. An einer Stirnseite der Platte ist eine Abflussleitung angeordnet. Im Betrieb der Platte wird ein Unterdruck an der Abflussleitung erzeugt, der das Permeat durch die Membran und durch das Stützvlies entlang der Platte saugt.

Die Zusammenfassung der JP-A-07194947 offenbart eine Stützanordnung für ein Membranfilter, die aus zwei parallelen, gelochten Platten besteht. Die Platten sind durch in Abflussrichtung verlaufende Stege miteinander verbunden.

GB 2 009 618 A zeigt eine Stützvorrichtung für Membranen in einem Dialyseelement. Die Stützvorrichtung besteht aus Filamenten oder Fäden. Die Stützvorrichtung wird mit der Membrane spiralförmig zusammengerollt. Die Fäden bilden ein flächiges rechteckiges Gitter aus durchgehenden Stegen.

US 4,062,756 offenbart ebenfalls eine Stützvorrichtung für Dialyseelemente. Sie besteht als aus einem Geflecht oder Netz aus Polyäthylen, in dem einzelne Fäden unter Hitzeeinwirkung gequetscht werden. Dabei geschieht dieses Quetschen der Fäden nur in bestimmten Bereichen, so dass der Flüssigkeitsstrom entsprechend geleitet wird. Die Fäden bilden ein flächiges rechteckiges Gitter aus durchgehenden Stegen.

GB 863,396 zeigt ebenfalls eine Stützvorrichtung, die durch Einschneiden und Auseinanderziehen einer Bahn aus Polyäthylen oder PVC erzeugt wird. Dadurch entsteht ein räumliches Gitter mit Zwischenräumen.

DE 26 43 122 zeigt eine Zwischenlage für Membranen eine Filtereinrichtung. In einem generell flachen Randbereich derselben in welchem Permeat der Zwischenlage entlang aus der Filtereinrichtung heraus fliessen soll, sind Noppen und andere Vorsprünge angeordnet, welche die Membranen jeweils von der Zwischenlage beabstanden. Diese verhindern, dass die Membran gegen die Oberfläche gesogen wird, und kein Permeat mehr durchfliessen kann.

### DARSTELLUNG DER ERFINDUNG

Es ist Aufgabe der Erfindung, eine Membran-Stützvorrichtung und ein Membranfilter der eingangs genannten Art zu schaffen, welche einem durchfliessenden Permeat einen kleinen Fliesswiderstand entgegensetzen und dabei eine einfache Bauweise aufweisen.

Diese Aufgabe lösen eine Membran-Stützvorrichtung und ein Membranfilter mit den Merkmalen der Patentansprüche 1 und 5.

Die Membran-Stützvorrichtung ist also eine starre Gitterplatte aus einem flächigen Gitter, welches Gitter durch Gitterstege gebildet wird, welche zwischen den Gitterstegen liegende Zwischenräume definierten, und wobei die Gitterstege Durchlassbereiche aufweisen, welche benachbarte Zwischenräume miteinander verbinden. Das Gitter weist eine erste und eine zweite Gitterebene aus jeweils durchgehenden Stegen auf, wobei die Gitter der Gitterhälften gegeneinander verschoben sind. Das erste und das zweite Gitter sind und aus einer der geometrischen Formen Dreieck, Quadrat, Rechteck, Sechseck, Kreis oder Parallelogramm gebildet, und an Kreuzungspunkten von zumindest einer beiden Gitterhälften sind Noppen zur Stützung einer gegenüberliegenden Filtermembran angebracht.

Die Membran-Stützvorrichtung weist eine durch die Stege gebildete Vielzahl von Stützflächen auf, welche eine angebrachte flexible Membran ausreichend stützen. Sie bildet also eine Stützplatte für eine oder zwei parallele Membranen. Gleichzeitig erlauben die Zwischenräume und die sie verbindenden Durchlassbereiche einen ungehinderten Fluss des Permeats in alle Richtungen innerhalb der Gitterebene.

Damit sind keine Stützvliese oder "Spacer" mehr notwendig, wodurch sich der Aufbau und die Herstellung eines Membranfilters vereinfachen. Die Membran-Stützvorrichtung selber kann beispielsweise aus Kunststoff in einem Spritzgussverfahren einstückig erzeugt werden. Vorzugsweise wird ein thermoplastischer Kunststoff verwendet, so dass dünne und flexible Filtermembranen aufgeschweisst werden können, ohne dass weitere Befestigungsmittel nötig werden.

Bestimmte bevorzugte Ausführungsformen der Erfindung können als übereinandergelegte Gitterhälften betrachtet werden. Gitterelemente der Gitterhälften sind Vorzugsweise geometrische Grundformen wie Dreieck, Quadrat, Rechteck, Sechseck, Kreis, Parallelogramm etc. Die Gitterhälften sind zueinander versetzt oder verschoben angeordnet, wobei ein Kreuzungspunkt des einen Gitters jeweils über respektive unter einem Loch des anderen Gitters liegt. Vorzugsweise sind an solchen Kreuzungspunkten einer Gitterhälfte Noppen angebracht, die in die jeweils andere Gitterhälfte hineinragen und dadurch ein Einbuchten der Membran in das entsprechende Loch der jeweils anderen Gitterhälfte verhindern.

Abmessungen der Stege und der Zwischenräume sind auf eine Flexibilität der Membran und auf einen Betriebsdruck abgestimmt, so dass im Betrieb weder die Membran Einbuchtungen bildet, noch eine zu grosse Fläche der Membran auf den Stützflächen aufliegt. Eine Höhe der Stege, die gleich einer Dicke der Gitterplatte ist, richtet sich nach einer geforderten Steifigkeit des fertigen Membranfilters. Die Gitterplatte ist wie erwähnt, im Vergleich mit einer Filtermembran grundsätzlich starr und somit selbsttragend, darf aber durchaus leicht biegbar sein, wie sich dies bei Verwendung eines Kunststoffes bei einer gewissen Grösse der Platte automatisch ergibt. Bei einer Montage mit anderen Membranfiltern und/oder in einem Rahmen ergibt sich eine starke Versteifung einer solchen Gesamtanordnung.

Eine Membranfilter respektive eine einzelne Filterlamelle gemäss der Erfindung weist eine erfindungsgemässe Membran-Stützvorrichtung oder Stützplatte auf. Die Platte weist zwei parallele Hauptflächen und eine umlaufende Randfläche auf. Auf beiden oder nur einer der Hauptflächen sind Filtermembranen befestigt, vorzugsweise durch Schweissen. Dazu ist die Stützplatte aus thermoplastischen Material gebildet und weist in einem Randbereich einer Hauptfläche ein an deren Umfang entlang verlaufendes Schweissprofil auf. Das Schweissprofil besteht aus gegenüber der Gitterplatte leicht erhabenen Stellen. Zum Schweissen wird die Filtermembran durch ein erhitztes Werkzeug gegen diese Stellen gepresst. An den erhabenen Stellen bildet sich eine Schweissverbindung respektive Schweissnaht zwischen Membran und Stützplatte.

Zur Verstärkung der Schweissverbindungen, insbesondere für eine Rückspülung des Membranfilters, sind in einer bevorzugten Ausführungsform der Erfindung einzelne Stellen des Gitters, insbesondere die Noppen, mit einer Filtermembran verschweisst. In diesem Fall werden die Noppen mit einem leicht erhabenen, vorzugsweise runden Schweissprofil ausgebildet. Durch die Rückspülbarkeit und Reinigungsmöglichkeit kann das Membranfilter in einem Dauerbetrieb - im Gegensatz zu Einmal- oder Wegwerf-Filtern - eingesetzt werden.

Die Erfindung wird vorzugsweise zur Filterung von verunreinigtem Wasser verwendet, insbesondere in einer Filteranlage für Trinkwasser oder Abwasser. In diesem Fall liegt als Flüssigkeit Wasser vor, das gegebenenfalls mit Schlamm oder Belebtschlamm vermischt ist. Der Einfachheit halber ist in der vorliegenden Beschreibung jeweils die Rede von Wasser, wobei aber in anderen Anwendungen auch andere Flüssigkeiten als Wasser gefiltert werden können.

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen:
- Figur 1: eine Aufsicht auf einen Ausschnitt eines erfindungsgemässen Membran-Stütsgerüsts in dessen Randbereich;
- Figur 2: schematisch einen Querschnitt entlang zweier Stege des Membran- Stützgerüsts;
- Figur 3: schematisch einen Querschnitt durch ein Membran-Stütsgerüst mit beiderseits angebrachten Membranen;
- Figur 4: schematisch verschiedene Gitterstrukturen von erfindungsgemässen Membran-Stützgerüsten;
- Figur 5: schematisch verschiedene Ausführungsformen von Schweissverbindungen am Umfang einer Membranplatte;
- Figur 6: eine Aufsicht auf ein erfindungsgemässes Membran-Stützgerüst; und
- Figur 7: einen Querschnitt durch ein Membran-Stützgerüst gemäss einer bevorzugten Ausführungsform der Erfindung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

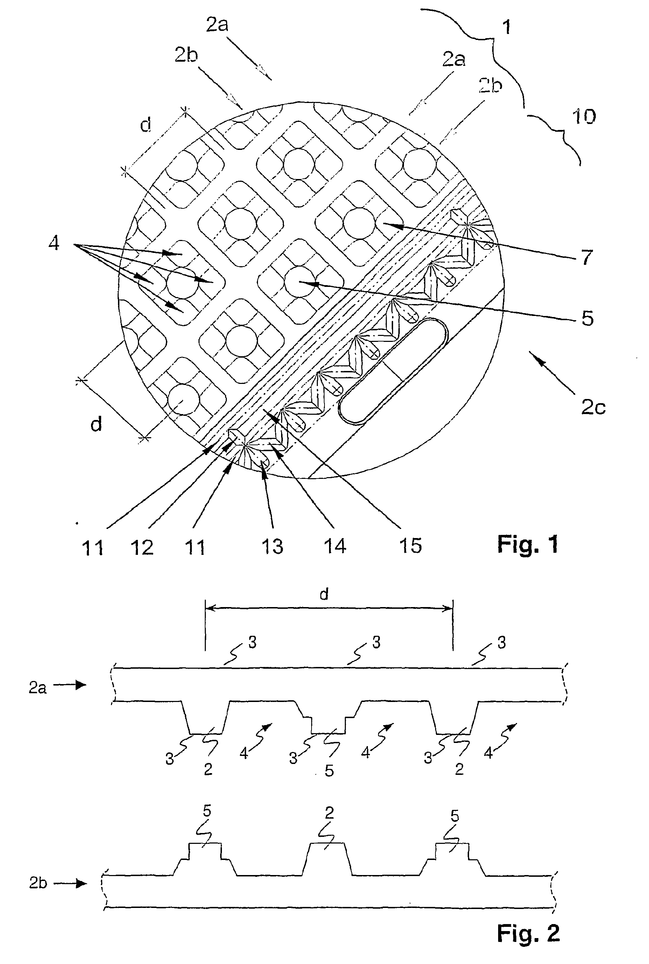

Figur 1 zeigt eine Aufsicht auf einen Ausschnitt eines erfindungsgemässen Membran-Stützgerüsts in dessen Randbereich. Dem Rand entlang verläuft ein Schweissprofil 10. Die grösste Fläche des Stützgerüsts wird durch ein Gitter 1 gebildet. Das Gitter 1 weist Gitterstege 2a,2b mit Zwischenräumen 6 und Kreuzungsstellen 7 auf. An den Kreuzungsstellen 7 sind vorzugsweise Noppen 5 angeordnet.

Figur 2 zeigt in der oberen Hälfte schematisch einen Längsschnitt durch einen der Gitterstege 2a des Membran-Stützgerüsts. Der Gittersteg 2a kann einerseits als durchgehender Steg betrachtet werden, der stellenweise durchbrochen ist. Solche durchbrochene Stellen bilden Durchlassbereiche 4, nicht durchbrochene Stellen bilden Stützbereiche 3. Bei der Verwendung des Gitters 1 in einem Membranfilter werden beiderseits des Gitters 1 zwei Filtermembranen angeordnet und durch die Stützbereiche 3 gestützt. Einige der Stützbereiche 3 können auch als zylindrische Noppen 5 ausgebildet sein. Andererseits kann der Gittersteg 2a als vollständig durchgehender, das heisst nicht unterbrochener Halbsteg mit aufgesetzten Noppen und quer verlaufenden weiteren Halbstegen 2 betrachtet werden. Eine Noppe 5 ist bei dieser Betrachtungsweise an einem Halbsteg angebracht, der eine erste Membran stützt, die Noppe 5 stützt die zweite, der ersten gegenüberliegende Membran.

Durch das Abstützen der Membran mit den Noppen 5 wird im Betrieb ein Einbauchen der Membran gegen die Öffnung in der Gitterplatte 1 aufgrund der Druckdifferenz verhindert. Dadurch wird eine effektive Selbstreinigung der Membran im Betrieb möglich, da keine Taschen entstehen, in welchen sich durch dadurch bildende ungleiche Strömungsverhältnisse Schmutz ablagert.

In der unteren Hälfte der Figur 2 ist ein Längsschnitt eines parallel und neben dem Gittersteg 2a verlaufenden weiteren Gitterstegs 2b gezeigt. Durchlassbereiche 4 und Stützbereiche 3 wechseln sich in nebeneinanderliegenden Gitterstegen 2a,2b ab, so dass einerseits ein ungehinderter Durchfluss einer Flüssigkeit und andererseits eine ausreichende Stützung der Membranen gewährleistet ist. Mehrere Gitterstege berühren und/oder überkreuzen einander und bilden so ein vermaschtes Gitter 1.

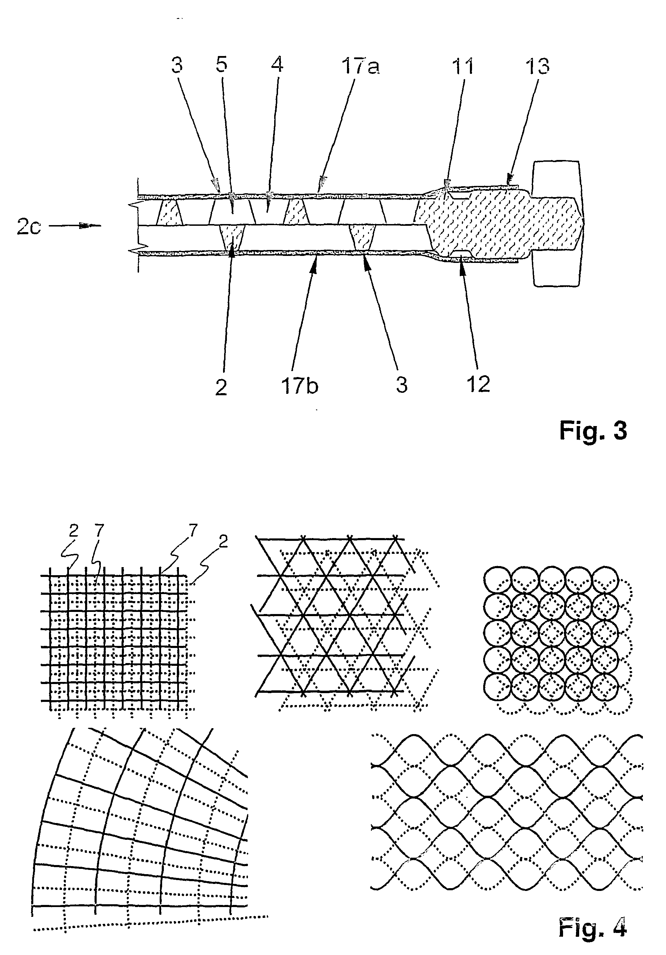

Figur 3 zeigt eine Querschnittszeichung durch ein Gitter 1 in einer Schnittrichtung 2c. Beiderseits des Gitters 1 sind erste und zweite Filtermembranen 17a,17b angeordnet. Durch die versetzten Stege 2 und die korrespondierenden Durchlassbereiche 4 ergibt sich ein ungehinderter Durchfluss sowohl entlang der Zeichnungsebene wie auch senkrecht dazu.

Die in Figur 1 gezeigte Gitterstruktur baut auf einer quadratischen Grundform auf. Bevorzugte Masse hängen von der Steifigkeit der zu stützenden flexiblen Membran, Viskosität des Permeats und von den Betriebsverhältnissen, insbesondere Drücken ab. In einer bevorzugten Ausführungsform der Erfindung für ein Abwasserfilter beträgt ein Abstand d zweier gleich orientierter Stege einer Gitterhälfte 12 mm, eine Stegbreite 2.5 mm, ein Noppendurchmesser 4.5 mm. Alle angegebenen Masse können um 10-50% oder mehr variiert werden. Die Stege und Noppen weisen zur einfacheren Fertigung einen trapezfömigen Querschitt auf.

Die Gitterstruktur kann als aus zwei aufeinandergelegten Gitterhälften aus Halbstegen bestehend betrachtet werden. Spritzgussformen zur Herstellung eines erfindungsgemässen Gitters 1 lassen sich in einfacher Weise durch Ausfräsen zweier Formhälften herstellen, wobei jeweils eine Formhälfte einer Gitterhälfte entspricht. In der Figur 4 ist links oben schematisch eine erste Gitterhälfte ausgezogen dargestellt und eine zweite, parallel aber um d/2 verschoben angeordnete Gitterhälfte strichliert dargestellt. Diese Gitterhälften basieren auf einer quadratischen Grundform. Auf anderen Grundformen wie Dreieck, Kreis, Kreissegment, Wellenline aufbauende Gitterstrukturen sind in den weiteren schematischen Darstellungen von Figur 3 gezeigt. Weitere mögliche Grundformen sind beispielsweise Sechseck, Parallelogramm respektive Raute, Rechteck, etc... Es kann auch die erste Gitterhälfte eine andere Grundform als die zweite aufweisen, solange beim Übereinanderlegen ausreichend viele Durchlassbereiche 4 entstehen.

Das Schweissprofil 10 wird gebildet durch leicht, d.h. um einige Zehntelsmillimeter, beispielsweise 0.3 bis 1.5 mm, erhabene Schweissraupen. Zwei parallele Schweissraupen 11 umlaufen die ganze Fläche des Gitters 1. Sie sind an einer Vielzahl von Stellen durch kammerbildende Schweissraupen 12 verbunden. Diese erhöhen die Zuverlässigkeit der Abdichtung für den Fall, dass den parallelen Schweissraupen 11 entsprechend gebildete Schweissnähte stellenweise undicht sein sollten. Um eine mechanische Festigkeit der Schweissung zu erhöhen, ist mindestens an einer Aussenseite der parallelen Schweissraupen 11 eine Vielzahl von senkrecht und/oder im Winkel zu diesen angeordneten kurzen Schweissraupen angeordnet. Diese verbessern die Haftung der Schweissnaht insbesondere gegen eine Anströmung gegen eine Kante einer aufgeschweissten Membran. Dank den abstehenden kurzen Schweissraupen ist beim Schweissen keine völlig exakte Positionierung der Membran bezüglich der Stützplatte erforderlich. Solange eine Membrankante im Bereich der abstehenden kurzen Schweissraupen verläuft, wird sie zuverlässig befestigt und kann nicht wesentlich unterströmt werden. Im Gegensatz zu einer vollflächigen Schweissung im Bereich des Schweissprofils entstehen Schweissnähte nur im Bereich der Schweissraupen. Es muss somit weniger Energie zum Schweissen eingebracht werden, wodurch Beschädigungen die Membran vermieden werden.

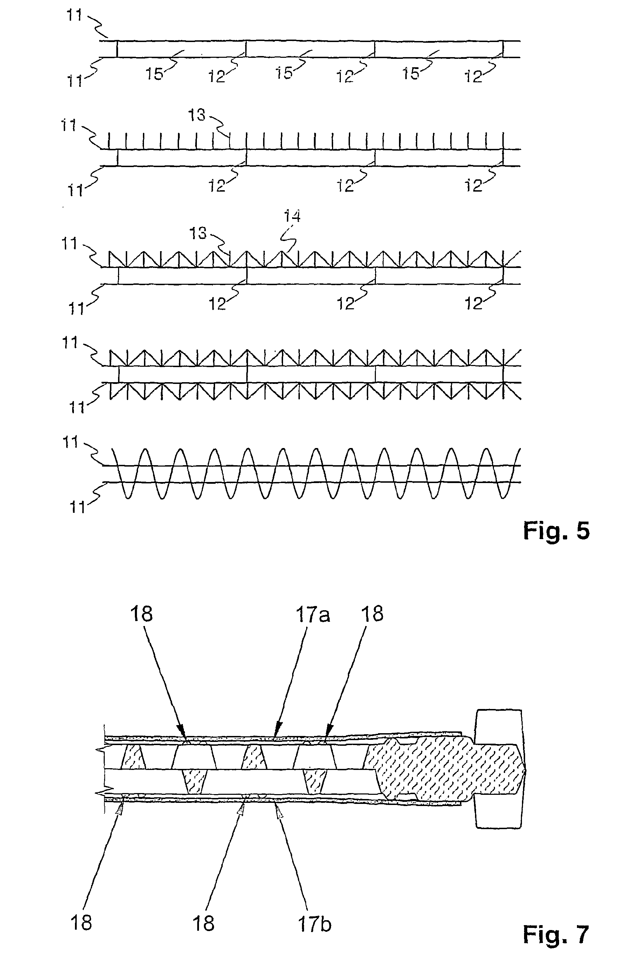

Figur 5 zeigt schematisch verschiedene Ausführungsformen von Schweissverbindungen am Umfang einer Membranplatte. Von oben nach unten sind gezeigt:
- Parallele Schweissraupen 11, verbunden durch kammerbildende Schweissraupen 12, welche Kammern 15 zwischen den parallelen Schweissraupen 11 bilden.
- Zusätzlich kammartig abgehende Schweissraupen 13 zur Verstärkung der Schweissverbindung.
- Zusätzlich zickzackförmige Schweissraupen 14.
- Zusätzlich beidseits der parallelen Schweissraupen 11 angeordnete, seitlich abgehende kurze Schweissraupen. Dadurch wird die Schweissverbindung gegenüber einer Belastung durch einen erhöhten Innendruck des Filters befestigt.

Dies ist bei einer Rückspülung des Filters von Vorteil.
- Parallele Schweissraupen 11 mit einer wellenförmig über diesen verlaufenden
- Schweissraupe zur Verstärkung und Kammerbildung.

Die Schweissprofile sind in Figur 4 der Einfachheit halber gerade dargestellt, können natürlich aber auch gebogen oder geknickt ausgeführt sein.

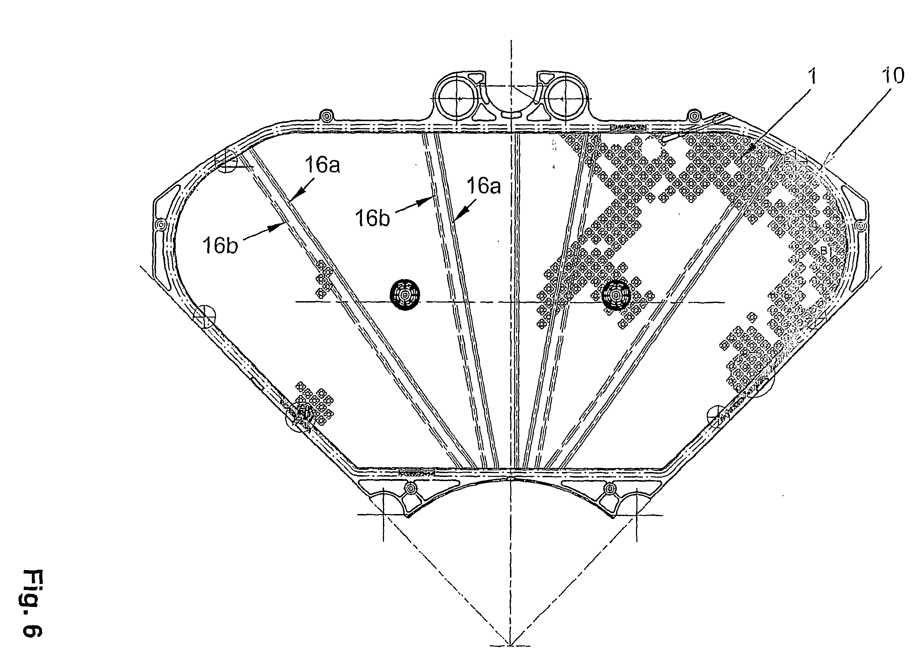

Figur 6 zeigt eine Aufsicht auf ein erfindungsgemässes Membran-Stützgerüst. Dieses ist trapezförmig oder angenähert kreissegmentförmig ausgestaltet. In anderen Ausführungsformen der Erfindung ist das Membran-Stützgerüst rechteckig. Neben dem bereits beschriebenen Gitter 1 und dem umlaufenden Schweissprofil 10 zeigt die Figur Verstärkungsrippen 16a,16b zur mechanischen Stabilisierung des Gitters 1. Bei der Herstellung des Gitters 1 dienen die den Verstärkungsrippen 16a,16b entsprechenden Hohlräume in der Giessform als Fliesshilfen. Dabei verlaufen jeweils zwei Verstärkungsrippen 16a,16b im wesentlichen parallel und versetzt zueinander, wobei eine erste dieser Verstärkungsrippen 16a in der ersten Gitterhälfte und eine zweite dieser Verstärkungsrippen 16b in der zweiten Gitterhälfte verläuft. Solange eine Breite der Verstärkungsrippen 16a,16b kleiner ist als ein Gitterabstand eines Halbgitters, und die Verstärkungsrippen 16 nicht ständig parallel zu einem Gittersteg 2a,2b verlaufen, ist der Durchfluss der Flüssigkeit nicht wesentlich behindert.

Das Stützgerüst gemäss Figur 6 weist in einem mittleren Bereich zwei kreisförmige Bereiche auf, in deren Mitte jeweils eine vorstehende, grössere und aus der Gitterebene hervorstehende Noppe zur Beabstandung von einem weiteren, parallel angeordneten Stützgerüst ausgeformt ist. Die Membran weist deshalb im Bereich dieser grösseren Noppen einen Durchbruch für diese auf und ist flüssigkeitsdicht mit der Gitterplatte verschweisst. Bei einem rechteckigen Membran-Stützgerüst ist eine solche grössere Noppe vorzugsweise in der Mitte angeordnet. An den Rändern eines Stützgerüstes können weitere Noppen oder Vorsprünge zu Beabstandung von nebeneinanderliegenden Stützgerüsten angeordnet sein.

Figur 7 zeigt neben den bisher beschriebenen Merkmalen Schweissnahtraupen 18 auf den Noppen 5. Dies erleichtern ein Verschweissen der Filtermembranen 17a,17b mit dem Gitter 1 nicht nur im Randbereich sondern mit kleinen Abständen über einen Grossteil des Gitters oder die gesamte Gitterfläche. Dabei sind nicht unbedingt sämtliche Noppen 5 mit der Membran verschweisst, sondern beispielsweise nur ca 10% bis 30% oder 50%, vorzugsweise 15% bis 25% der Noppen 5. Alternativ kann die Verschweissung auch über Schweisspunkte oder -Raupen auf aussenliegenden Seiten der Gitterstege 2a,2b und oder Verstärkungsrippen 16a,16b erreicht werden, mit einer vergleichbaren Dichte von Schweisspunkten. Durch die Vielzahl von solchen Schweisspunkten wird bei einer Rückspülung der Membran die resultierende Kraft auf eine Vielzahl von Noppen und Schweissverbindungen über die Membran verteilt. Dadurch wird ein Rückspülen der Flachmembran überhaupt möglich.

Eine Rückspülung findet vorzugsweise nur mit Hilfe der Gravitation statt, durch Anschliessen eines höher gelegenen Gefässes mit Reinigungsmittel und einem damit erzeugten Überdruck von beispielsweise 20 bis 100 Millibar. Im Normalbetrieb wird das Permeat mit einem Unterdruck von 20 bis 200 oder 300 Millibar abgesaugt.

### BEZUGSZEICHENLISTE

- 1: Gitter
- 2: Gittersteg
- 2a,2b: erster Gittersteg, zweiter Gittersteg
- 3: Stützbereich
- 4: Durchlassbereich
- 5: Noppen
- 6: Zwischenraum
- 7: Kreuzungsstelle
- 10: Schweissprofil
- 11: parallele Schweissraupen
- 12: kammerbildende Schweissraupe
- 13: kammartig abgehende Schweissraupe
- 14: zickzackförmige Schweissraupe
- 15: Kammer
- 16a,16b: ersteVerstärkungsrippe, zweite ersteVerstärkungsrippe
- 17a,17b: erste Filtermembran, zweite Filtermembran
- 18: Schweissnahtraupe auf Noppen

## Patentansprüche

1. Membran-Stützvorrichtung für ein Membranfilter zur Filterung von Abwasser, welche Membran-Stützvorrichtung für eine flüssigkeitsdichte Verbindung mit einer Filtermembran vorgesehen ist,
wobei die Membran-Stützvorrichtung ein flächige Gitter (1) aufweist, welches Gitter (1) durch Gitterstege (2a,2b) gebildet wird, welche zwischen den Gitterstegen (2a,2b) liegende Zwischenräume (6) definieren, und wobei die Gitterstege (2a,2b) Durchlassbereiche (4) aufweisen, welche benachbarte Zwischenräume (6) miteinander verbinden, wobei das Gitter (1) eine erste und eine zweite Gitterebene aufweist, die erste Gitterebene eine erste Gitterhälfte aus durchgehenden Stegen (2) und die zweite Gitterebene eine zweite Gitterhälfte aus durchgehenden Stegen (2) aufweist, und die Gitter der Gitterhälften gegeneinander verschoben sind,
**dadurch gekennzeichnet dass** das erste und das zweite Gitter starr sind und aus einer der geometrischen Formen Dreieck, Quadrat, Rechteck, Sechseck, Kreis oder Parallelogramm gebildet sind,
und wobei an Kreuzungspunkten (7) von zumindest einer beiden Gitterhälften Noppen (5) zur Stützung einer gegenüberliegenden Filtermembran angebracht sind.

2. Membran-Stützvorrichtung nach Anspruch 1, wobei jeder der Zwischenräume (6) mit jedem von ihm benachbarten Zwischenräumen (6) verbunden ist.

3. Membran-Stützvorrichtung nach einem der Ansprüche 1 oder 2, welche auf mindestens einer Seite der Stützvorrichtung (1) ein Schweissprofil (10) aufweist, welches zur Bildung zweier parallel verlaufender Schweissnähte (11) und von Kammern (15) zwischen diesen parallel verlaufenden Schweissnähten (11) ausgebildet ist.

4. Membran-Stützvorrichtung nach Anspruch 3, wobei das Schweissprofil (10) zur Bildung von kurzen Schweissnähten (13,14) ausgebildet ist, welche senkrecht zu einer Aussenseite und/oder im Zick-Zack entlang einer Aussenseite von mindestens einer äusseren der parallelen Schweissnähte (11) angeordnet sind.

5. Membranfilter, aufweisend eine Membran-Stützvorrichtung nach einem der Ansprüche 1 bis 4.

6. Membranfilter nach Anspruch 5 abhängig von Anspruch 1, wobei mehrere Noppen mit einer Filtermembran verschweisst sind.

## Claims

1. Membrane supporting device for a membrane filter for filtering waste water, which membrane supporting device is provided for a liquid-tight connection with the membrane filter, wherein the membrane supporting device comprises a laminar mesh (1) formed by mesh ligaments (2a,2b) which define spaces (6) between the mesh ligaments (2a,2b), und wherein the mesh ligaments (2a,2b) comprise passage areas (4) connecting adjoining spaces (6), wherein the mesh (1) comprises a first and a second mesh level, the first mesh level comprises a first mesh half of continuous ligaments (2) and the second mesh level a second mesh half of continuous ligaments (2), and the mesh of the mesh halves or staggered in relation to each other,
**characterized in that** the first and the second mesh are rigid and designed in one of the geometrical shapes triangle, square, rectangle, hexagon, circle or parallelogram, and wherein burlings (5) for the support of an opposite filter membrane are attached at intersections (7) of at least one of the two mesh halves.

2. Membrane supporting device according to claim 1, wherein each space (6) is connected to each of its adjacent spaces (6).

3. Membrane supporting device according to any one of claim 1 or 2, comprising on at least one side of the supporting device (1) a welding profile (10) designed to form two parallel welding seams (11) and chambers (15) between these parallel welding seams (11).

4. Membrane supporting device according to claim 3, wherein the welding profile (10) is designed to form short welding seams (13,14) which are arranged vertically to and/or in a zig-zag along an outer side of at least an outer one of the parallel welding seams (11).

5. Membrane filter comprising a membrane supporting device according to any one of the claims 1 to 4.

6. Membrane filter according to claim 5 dependent on claim 1, wherein several burlings are welded to a filter membranes.

## Revendications

1. Dispositif de support de membrane pour filtre à membrane destiné à filtrer des eaux usées,
le dispositif de support de membrane étant prévu pour être relié de manière étanche aux liquides à une membrane de filtre,
le dispositif de support de membrane présentant une grille plate (1), cette grille (1) étant formée par des traverses de grille (2a, 2b) qui définissent des espaces intermédiaires (6) situés entre les traverses de grille (2a, 2b),
les traverses de grille (2a, 2b) présentant des zones de passage (4) qui relient les uns aux autres des espaces intermédiaires (6) voisins,
la grille (1) présentant un premier et un deuxième plan de grille, le premier plan de grille présentant une première moitié de grille constituée de traverses continues (2) et le deuxième plan de grille une deuxième moitié de grille constituée de traverses continues (2), les grilles des moitiés de grille étant décalées l'une par rapport à l'autre,
**caractérisé en ce que**
la première et la deuxième grille sont rigides et sont formées de l'une des formes géométriques que sont le triangle, le carré, le rectangle, l'hexagone, le cercle ou le parallélogramme et
**en ce que** des bosses (5) sont placées en des points de croisement (7) d'au moins l'une des deux moitiés de grille pour supporter une membrane de filtre opposée.

2. Dispositif de support de membrane selon la revendication 1, dans lequel chacun des espaces intermédiaires (6) est relié à chacun des espaces intermédiaires (6) qui lui est voisin.

3. Dispositif de support de membrane selon l'une des revendications 1 ou 2, qui présente sur au moins un côté du dispositif de support (1) un profilé soudé (10) configuré de manière à former deux cordons de soudure (11) qui s'étendent en parallèle et des chambres (15) situées entre ces cordons de soudure (11) qui s'étendent en parallèle.

4. Dispositif de support de membrane selon la revendication 3, dans lequel le profilé soudé (10) est configuré de manière à former de courts cordons de soudure (13, 14) qui sont disposés perpendiculairement à un côté extérieur et/ou en zigzag le long d'un côté extérieur d'au moins l'un des cordons de soudure (11) parallèles situé à l'extérieur.

5. Filtre à membrane présentant un dispositif de support de membrane selon l'une des revendications 1 à 4.

6. Filtre à membrane selon la revendication 5 dans la mesure où elle dépend de la revendication 1, dans lequel plusieurs bosses sont soudées à une membrane de filtre.
